# EUROPEAN PATENT SPECIFICATION

(11) **EP 0 815 306 B1**
(45) Date of publication and mention of the grant of the patent: **24.07.2002**
(21) Application number: 96907889.8
(22) Date of filing: 23.02.1996
(51) Int. Cl.: D04H 13/00, D06M 10/02, D06M 10/10, D06M 15/576

(54) **NONWOVEN LAMINATE BARRIER MATERIAL**
SPERRVERBUNDVLIESSTOFF
MATERIAU LAMINE NON TISSE COMME BARRIERE

(30) Priority: 16.03.1995 US 405485
(43) Date of publication of application: 07.01.1998
(73) Proprietor: KIMBERLY-CLARK WORLDWIDE, INC., Neenah, Wisconsin 54956 (US)
(72) Inventor: COHEN, Bernard, Berkeley Lake, GA 30136 (US)
(74) Representative: Diehl, Hermann, Dr. Dipl.-Phys.
(86) International application number: US9602468
(87) International publication number: WO9628597

(56) References cited:
- WO-A-93/09156
- GB-A- 2 026 379
- US-A- 4 443 513
- US-A- 5 165 979
- US-A- 5 455 108
- US-A- 5 491 022
- DATABASE WPI Section Ch, Week 8428 Derwent Publications Ltd., London, GB; Class A87, AN 84-173431 XP002008760 & JP,A,59 094 621 (UNITIKA KK) , 31 May 1984

## Description

### FIELD OF THE INVENTION

The present invention relates to protective garments. More particularly, the present invention relates to protective garments formed from nonwoven fabrics having improved particulate barrier properties.

### BACKGROUND OF THE INVENTION

There are many types of limited use or disposable protective garments designed to provide barrier properties. Protective garments should be resistant to penetration by both liquids and/or particles. For a variety of reasons, it is undesirable for liquids and pathogens which may be carried by liquids to pass through the garment to contact persons working in an environment where pathogens are present.

Similarly, it is highly desirable to isolate persons from harmful substances which may be present in a work place or accident site. To increase the likelihood that the protective garment is correctly worn thereby reducing the chance of exposure, workers would benefit from wearing a protective garment that is relatively impervious to liquids and/or particles and durable but which is still comfortable so it does not reduce the workers' performance. After use, it is usually quite costly to decontaminate a protective garment that has been exposed to a harmful or hazardous substance. Thus, it is important that a protective garment be cost effective so as to be disposable.

One type of protective garment is disposable protective coveralls. Coveralls can be used to effectively isolate a wearer from a harmful environment in ways that open or cloak style protective garments such as drapes, gowns and the like are unable to do. Accordingly, coveralls have many applications where isolation of a wearer is desirable.

Disposable protective garments also include disposable surgical garments such as disposable surgical gowns and drapes. As is generally known, surgical gowns and drapes are designed to greatly reduce, if not prevent, the transmission through the surgical garment of liquids and biological contaminates which may become entrained therein. In surgical procedure environments, such liquid sources include the gown wearer's perspiration, patient liquids such as blood, saliva, perspiration and life support liquids such as plasma and saline.

Many surgical garments were originally made of cotton or linen and were sterilized-prior to their use in the operating room. These surgical garments, however, permitted transmission therethrough or "strike-through" of many of the liquids encountered in surgical procedures. These surgical garments were undesirable, if not unsatisfactory, because such "strike through" established a direct path for transmission of bacteria and other contaminates to and from the wearer of the surgical garment. Furthermore, the garments were costly, and, of course, laundering and sterilization procedures were required before reuse.

Disposable surgical garments have largely replaced linen surgical gowns. Because many surgical procedures require generally a high degree of liquid repellency to prevent strike-through, disposable surgical garments for use under these conditions are, for the most part, made entirely from liquid repellent fabrics.

Therefore, generally speaking, it is desirable that disposable protective garments be made from fabrics that are relatively impervious to liquids and/or particulates. These barrier-type fabrics must also be suited for the manufacture of protective apparel at such low cost that make discarding the garments after only a single use economical.

Examples of disposable protective garments which are generally manufactured from nonwoven web laminates in order to assure that they are cost effectively disposable are coveralls, surgical gowns and surgical drapes sold by the Kimberly-Clark Corporation. Many of the disposable protective garments sold by Kimberly-Clark Corporation are manufactured from a three layer nonwoven web laminate. The two outer layers are formed from spunbond polypropylene · fibers and the inner layer is formed from meltblown polypropylene fibers. The outer layers of spunbond provide tough, durable and abrasion resistant surfaces. The inner layer is not only water repellent but acts as a breathable filter barrier allowing air and moisture vapor to pass through the bulk of the fabric while filtering out many. harmful particles.

In some instances, the material forming protective garments may include a film layer or a film laminate. While forming protective garments from a film may improve particle penetration through the bulk of the protective garment, such film or film-laminated materials may also inhibit or prevent the passage of air and moisture vapor therethrough. Generally, protective garments formed from materials which do not allow sufficient passage of air and moisture vapor therethrough become uncomfortable to wear correctly for extended periods of time.

From Patent US 5,178,932 a three-layer nonwoven composite structure is known which has three melt-extruded nonwoven layers, each of which includes at least a portion of a nonwoven web. The microfibers of the second nonwoven web are prepared from a mixture of an additive and a second thermoplastic polymer, which additive imparts alcohol repellency to the surface of the microfibers. The composite structure is pattern bonded by the application of heat and pressure.

Thus, while in some instances, film or film-laminated materials may provide improved particulate barrier properties as compared to nonwoven-laminated fabrics, nonwoven-laminated fabrics generally provide greater wearer comfort. Therefore, a need exists for inexpensive disposable protective garments, and more particularly inexpensive disposable protective garments formed from a nonwoven fabric which provide improved particulate barrier properties while also being breathable and thus comfortable to wear correctly for extended periods of time.

### SUMMARY OF THE INVENTION

The present invention provides a nonwoven web having improved particulate barrier properties.

In one embodiment of the present invention the nonwoven web laminate comprises:
at least two layers comprising spunbond fibers and at least one layer comprising meltblown fibers, wherein the at least one layer which comprises meltblown fibers is between two layers which comprise spunbond fibers, and wherein the fibers of at least one of the layers have been subjected to direct current corona discharge; and
wherein the at least one layer which comprises meltblown fibers comprises an alcohol repellent comprising a fluorinated urethane derivative.

An antistat may be present on the surface of the nonwoven web.

The nonwoven web laminate may be a three layered laminate wherein at least one of the layers is subjected to corona discharge. The two outer layers may be formed from spunbond fibers and the inner layer may be formed from meltblown fibers. An antistat may be present on the surface of at least one of the layers. Also, an alcohol repellent material, and particularly an alcohol repellent material formed from a fluorinated urethan derivative, is present on the surface of at least one of the layers.

### DETAILED DESCRIPTION OF THE INVENTION

As used herein, the term "dielectric" means, according to McGraw-Hill Encyclopedia of Science & Technology, 7th Edition, Copyright 1992, a material, such as a polymer, which is an electrical insulator or which an electric field can be sustained with a minimum dissipation of power. A solid material is a dielectric if its valence band is full and is separated from the conduction band by at least 3 eV.

As used herein, the terms "necking", "neck stretching" or "necked stretched" interchangeably refer to a method of elongating a nonwoven fabric, generally in the machine direction, to reduce its width in a controlled manner to a desired amount. The controlled stretching may take place under cool, room temperature or greater temperatures and is limited to an increase in overall dimension in the direction being stretched up to the elongation required to break the fabric, which in many cases is about 1.2 to 1.4 times. When relaxed, the web retracts toward its original dimensions. Such a process is disclosed, for example, in U.S. Patent no. 4,443,513 to Meitner and Notheis and in U.S. Patent no.s 4,965,122, 5,226,992 and 5,336,545 to Morman.

As used herein the term "neck softening" or "necked softened" mean neck stretching carried out without the addition of heat to the material as it is stretched, i.e., at ambient temperature. In neck stretching or softening, a fabric is referred to, for example, as being stretched by 20%.

As used herein, the term "nonwoven web" refers to a web that has a structure of individual fibers or filaments which are interlaid, but not in an identifiable repeating manner.

As used herein the term "spunbond fibers" refers to fibers which are formed by extruding molten thermoplastic material as filaments from a plurality of fine, usually circular capillaries of a spinnerette with the diameter of the extruded filaments then being rapidly reduced as by, for example, in U.S. Patent no. 4,340,563 to Appel et al., and U.S. Patent no. 3,692,618 to Dorschner et al., U.S. Patent no. 3,802,817 to Matsuki et al., U.S. Patent nos. 3,338,992 and 3,341,394 to Kinney, U.S. Patent nos. 3,502,763 and 3,909,009 to Levy, and U.S. Patent no. 3,542,615 to Dobo et al. Spunbond fibers are generally continuous and larger than 7 microns in diameter.

As used herein the term "meltblown fibers" means fibers formed by extruding a molten thermoplastic material through a plurality of fine, usually circular, die capillaries as molten threads or filaments into a high velocity, usually heated gas (e.g. air) stream which attenuates the filaments of molten thermoplastic material to reduce their diameter. Thereafter, the meltblown fibers are carried by the high velocity gas stream and are deposited on a collecting surface to form a web of randomly disbursed meltblown fibers. Meltblowing is described, for example, in U.S. Patent no. 3,849,241 to Buntin, U.S. Patent no. 4,307,143 to Meitner et al., and U.S. Patent 4,707,398 to Wisneski et al. Meltblown fibers are generally smaller than 10 microns in diameter.

Polymers, and particularly polyolefins polymers, are well suited for the formation of fibers or filaments used in forming nonwoven webs which are useful in the practice of the present invention. Nonwoven webs can be made from a variety of processes including, but not limited to, air laying processes, wet laid processes, hydroentangling processes, spunbonding, meltblowing, staple fiber carding and bonding, and solution spinning.

As described in greater detail below, the entire thickness of the nonwoven web laminate may be subjected to corona discharge. Alternatively, individual nonwoven layers which, when combined, form the nonwoven web laminate may be separately subjected to corona discharge. When the entire thickness of the nonwoven web laminate is subjected to corona discharge, the fibers forming at least one of the nonwoven layers are desirably formed from a variety of dielectric polymers including, but not limited to, polyesters, polyolefins, nylon and copolymer of these materials. The fibers forming the other nonwoven layers may be formed from a variety of non-dielectric polymers, including, but not limited to, cellulose, glass, wool and protein polymers.

When one or more individual nonwoven layers are separately subjected to corona discharge, the fibers forming these nonwoven layers are desirably formed from the above described dielectric polymers. Those individual nonwoven layers which are not subjected to corona discharge may be formed from the above described non-dielectric polymers.

It has been found that nonwoven webs formed from thermoplastic based fibers and particularly polyolefin-based fibers are particularly well-suited for the above applications. Examples of such fibers include spunbond fibers and meltblown fibers. Examples of such nonwoven webs formed from such fibers are the polypropylene nonwoven webs produced by the Assignee of record, Kimberly-Clark Corporation.

In one embodiment, the present invention includes a nonwoven web laminate. In one embodiment which forms no part of the present invention, the nonwoven web laminate may include at least one layer formed from spunbond fibers and another layer formed from meltblown fibers, such as a spunbond/meltblown (SM) nonwoven web laminate. In one embodiment of the present invention, the nonwoven web laminate includes at least one layer formed from meltblown fibers which is positioned between two layers formed from spunbond fibers, such as a spunbond/meltblown/spunbond (SMS) nonwoven web laminate. Examples of these nonwoven web laminates are disclosed in U.S. Patent no. 4,041,203 to Brock et al., U.S. Patent no. 5,169,706 to Collier, et al, and U.S. Patent no. 4,374,888 to Bornslaeger.

More particularly, the spunbond fibers may be formed from polypropylene. Suitable polypropylenes for the spunbond layers are commercially available as PD-9355 from the Exxon Chemical Company of Baytown, Texas.

More particularly, the meltblown fibers may be formed from polyolefin polymers, and more particularly a blend of polypropylene and polybutylene. Examples of such meltblown fibers are contained in U.S. Patents 5,165,979 and 5,204,174. Still more particularly, the meltblown fibers may be formed from a blend of polypropylene and polybutylene wherein the polybutylene is present in the blend in a range from 0.5 to 20 weight percent of the blend. One such suitable polypropylene is designated 3746-G from the Exxon Chemical Co., Baytown, Texas. One such suitable polybutylene is available as DP-8911 from the Shell Chemical Company of Houston, Texas. The meltblown fibers may also contain a polypropylene modified according to U.S. patent 5,213,881.

The SMS nonwoven web laminate may be made by sequentially depositing onto a moving forming belt first a spunbond fabric layer, then a meltblown fabric layer and last another spunbond layer and then bonding the laminate in a manner described below. Alternatively, the layers may be made individually, collected in rolls, and combined in a separate bonding step. Such SMS nonwoven web laminates usually have a basis weight of from about 0.1 to 12 ounces per square yard (osy) (3 to 400 grams per square meter (gsm)), or more particularly from about 0.75 to about 5 osy (25 to 170 gsm) and still more particularly from about 0.75 to about 3 osy (25 to 100 gsm).

Methods of subjecting nonwoven webs to corona discharge, are well known by those skilled in the art. Briefly, corona discharge is achieved by the application of sufficient direct current (DC) voltage to an electric field initiating structure (EFIS) in the proximity of an electric field receiving structure (EFRS). The voltage should be sufficiently high such that ions are generated at the EFIS and flow from the EFIS to the EFRS. Both the EFIS and the EFRS are desirably formed from conductive materials. Suitable conductive materials include copper, tungsten, stainless steel and aluminum.

One particular technique of subjecting nonwoven webs to corona discharge is the technique disclosed in U.S. Patent Application No. 07/958,958 filed October 9, 1992 which is assigned to the University of Tennessee. This technique involves subjecting the nonwoven web to a pair of electrical fields wherein the electrical fields have opposite polarities. Each electrical field forms a corona discharge.

In those instances where the nonwoven web is a nonwoven web laminate, the entire thickness of the nonwoven web laminate may be subjected to corona discharge. In other instances, one or more of the individual layers which form the nonwoven web laminate or the fibers forming such individual layers may be separately subjected to corona discharge and then combined with other layers in a juxtaposed relationship to form the nonwoven web laminate. In some instances, the electric charge on the surface of the nonwoven web laminate prior to corona discharge may be substantially the same as the electric charge on the surface of the corona discharge treated web. In other words, the surface of the nonwoven web laminate may not generally exhibit a higher electric charge after subjecting the web to corona discharge than the electric charge present on the surface of the web before subjecting it to corona discharge.

Nonwoven web laminates may be generally bonded in some manner as they are produced in order to give them sufficient structural integrity to withstand the rigors of further processing into a finished product. Bonding can be accomplished in a number of ways such as hydroentanglement, needling, ultrasonic bonding, adhesive bonding and thermal bonding.

Ultrasonic bonding is performed, for example, by passing the nonwoven web laminate between a sonic horn and anvil roll as illustrated in U.S. Patent 4,374,888 to Bornslaeger.

Thermal bonding of a nonwoven web laminate may be accomplished by passing the same between the rolls of a calendering machine. At least one of the rollers of the calender is heated and at least one of the rollers, not necessarily the same one as the heated one, has a pattern which is imprinted upon the laminate as it passes between the rollers. As the fabric passes between the rollers it is subjected to pressure as well as heat. The combination of heat and pressure applied in a particular pattern results in the creation of fused bond areas in the nonwoven web laminate where the bonds thereon correspond to the pattern of bond points on the calender roll.

Various patterns for calender rolls have been developed. One example is the Hansen-Pennings pattern with between about 10 to 25% bond area with about 15.50 to 77.50 bonds/cm² (100 to 500 bonds/square inch) as taught in U.S. Patent 3,855,046 to Hansen and Pennings. Another common pattern is a diamond pattern with repeating and slightly offset diamonds.

The exact calender temperature and pressure for bonding the nonwoven web laminate depend on the thermoplastic(s) from which the nonwoven web is made. Generally for nonwoven web laminates formed from polyolefins, preferred temperatures are between 150 and 350°F (66 and 177°C) and the pressure is between 300 and 1000 pounds per lineal inch. More particularly, for polypropylene, the preferred temperatures are between 270 and 320°F (132 and 160°C) and the pressure is between 400 and 800 pounds per lineal inch.

In those instances where the nonwoven web is used in or around flammable materials and static discharge is a concern, the nonwoven web may be treated with any number of antistatic materials. In these instances, the antistatic material may be applied to the nonwoven by any number of techniques including, but not limited to dipping the nonwoven into a solution containing the antistatic material or by spraying the nonwoven with a solution containing the antistatic material. In some instances the antistatic material may be applied to both the external surfaces of the nonwoven and/or the bulk of the nonwoven. In other instances, the antistatic material may be applied to portions of the nonwoven, such as a selected surface or surfaces thereof.

Of particular usefulness is the antistat or antistatic material known as ZELEC®, an alcohol phosphate salt product of the Du Pont Corporation. The nonwoven web may be treated with the antistatic material either before or after subjecting the web to charging. Furthermore, some or all of the material layers may be treated with the antistatic material. In those instances where only some of the material layers are treated with antistatic material, the non-treated layer or layers may be subjected to charging prior to or after combining with the antistatic treated layer or layers.

Additionally, in those instances where the nonwoven web is used around alcohol, the nonwoven web may be treated with an alcohol repellent material. In these instances, the alcohol repellent material may be applied to the nonwoven by any number of techniques including, but not limited to dipping or by spraying the nonwoven web with a solution containing the alcohol repellent material. In some instances the alcohol repellent material may be applied to both the external surfaces of the nonwoven and the bulk of the nonwoven. In other instances, the alcohol repellent material may be applied to portions of the nonwoven, such as a selected surface or surfaces thereof.

Of particular usefulness are the alcohol repellent materials formed from fluorinated urethane derivatives, an example of which includes FX-1801. FX-1801, formerly called L-10307, is available from the 3M Company of St. Paul, Minnesota. FX-1801 has a melting point of about 130 to 138°C. FX-1801 may be added to either the spunbond and/or meltblown layer at an amount of about 0.1 to about 2.0 weight percent or more particularly between about 0.25 and 1.0 weight percent. FX-1801 may be topically applied or may be internally applied by adding the FX-1801 to the fiber forming polymer prior to fiber formation.

Generally, internal additives, such as the alcohol repellent additive FX-1801, suitable for use in the present invention should be non-toxic and have a low volatility. Additionally, the internal additive should be thermally stable at temperatures up to 300° C, and sufficiently soluble in the molten or semi-molten fiber forming polymer. The internal additive should also sufficiently phase separate such that said additive migrates from the bulk of the polymer fiber towards the surface of the polymer fiber as the fiber cools without requiring the addition of heat.

The layers of the fabric of this invention may also contain fire retardants for increased resistance to fire, pigments to give each layer the same or distinct colors, and/or chemicals such as hindered amines to provide enhanced ultraviolet light resistance. Fire retardants and pigments for spunbond and meltblown thermoplastic polymers are known in the art and may be internal additives. A pigment, if used, is generally present in an amount less than 5 weight percent of the layer.

### EXAMPLES

To demonstrate the attributes of the present invention, three polypropylene nonwoven samples were prepared and subjected to corona discharge.

### SAMPLE 1

SAMPLE 1 included a meltblown layer of about 0.5 osy (17 gsm) between two layers of spunbond material of about 0.55 osy (18.7 gsm) for a final SMS laminate with about a 1.6 osy (54 gsm) basis weight. The spunbond layers were made from polypropylene copolymer designated PD-9355 by Exxon Chemical Co. The meltblown layer was made from polypropylene designated 3746G from Exxon Chemical and polybutylene designated DP-8911 from Shell in an amount of about 10 weight percent. The SAMPLE 1 SMS laminate was necked softened by 8 percent at ambient temperature. ZELEC® was present on one of the spunbond surfaces in an amount of around 0.03% by weight of the spunbond layer.

Present in the meltblown layer of Sample 1 was FX1801. About 1.0% by weight of FX1801 was added to the polypropylene polymer prior to fiber formation. As described above, during processing of the polypropylene polymer to form fibers, the FX1801 bloomed to the surface of the formed meltblown fibers.

### SAMPLE 2

SAMPLE 2 was a quantity of 1.8 osy polypropylene SMS nonwoven web laminate. The spunbond layers were formed from polypropylene resins - Exxon PD-3445 and Himont PF-301. White and dark blue pigments, Ampacet 41438 (Ampacet Inc., N.Y.) and SCC 4402 (Standrige Color Inc., GA.), respectively, were added to the polypropylene resins forming one of the spunbond layers. The other spunbond layer was formed from these polypropylene resins without pigments. The meltblown layer was formed from the polypropylene resin Himont PF-015 without pigments.

The meltblown layer had an average basis weight of about .45 osy and each spunbond layer had an average basis weight of about .675 osy.

A 2.95% FC808 solution was prepared by adding 0.5% hexanol, 2.95% FC808 and about 96.5% water. The 2.95% FC808 solution was applied to the spunbond layer by spraying. Heat was applied to the sprayed spunbond layer until the spunbond layer was dry. FC808 is an alcohol repellent surface treatment formed from a polymeric fluoroaliphatic ester (20%), water (80%) and traces of ethyl acetate (400 parts/million). FC808 is available from 3M Company, St. Paul, MN.). SAMPLE 2 did not contain ZELEC®.

### SAMPLE 3

SAMPLE 3 was a quantity of 1.5 osy meltblown web. FC1802 was present in the meltblown web in an amount of around 2.4% by weight of the meltblown web. FC1802, which is available from the 3M Company, is an internal additive which was added to the polypropylene polymer prior to fiber formation. The primary components of FC1802 are eight-carbon fluorinated alkyl alkoxylates. The eight-carbon fluorinated alkyl alkoxylates make up between 86% to 89% of the FC1802 solution. Other components of FC1802 include an eight-carbon fluorinated alkyl sulfonamide (between 9% to 10%), seven-carbon fluorinated alkyl alkoxylates (between 2% to 4%) and a seven-carbon fluorinated alkyl sulfonamide (between 0.1% to 1%).

The corona discharge was produced by using a Model No. P/N 25A - 120volt, 50/60 Hz reversible polarity power unit (Simco Corp., Hatfield, PA.), which was connected to the EFIS, and a Model No. P16V 120V,.25A 50/60 Hz power unit (Simco Corp., Hatfield, PA.) which was connected to the EFRS. The EFIS was a RC-3 Charge Master charge bar (Simco. Corp.) and the EFRS was a solid, three inch diameter, aluminum roller. The corona discharge environment was 21.667°C (71° F)and 53% relative humidity. As described in the above U.S. Patent Application No. 07/958,958, two sets of EFIS/EFRS are used. The voltage applied to the first set of EFIS/EFRS was 15 KV/0.0 KV, respectively. The voltage applied to the second set of EFIS/EFRS was 25 KV/7.5 KV, respectively. The gap between the EFIS and the EFRS for each set was one inch.

The surface voltages for each side of the each of the SAMPLES were measured. An Electrostatic Voltmeter (Trek Model 344, Trek, Inc, Median, NY) was used to measure the surface voltages. The values reported below are average values. These average values were obtained by taking the average of at least ten readings on the sides of the SAMPLES.

Particulate filtration properties of each of the SAMPLEs, both pre- and post- corona discharge, were evaluated. The particulate filtration test used to evaluate the particulate filtration properties of these SAMPLES is generally known as the NaCl Filter Efficiency Test (hereinafter the "NaCl Test"). The NaCl Test was conducted on an automated filter tester, Certitest™ Model # 8110, which is available from TSI Inc., St. Paul, MN. The particulate filtration efficiency of the test fabric is reported as "% penetration". "% penetration" is calculated by the following formula - 100 x (1-(downstream particles/upstream particles)). The upstream particles represent the total quantity of approximately 0.1 µm NaCl aerosol particles which are introduced into the tester. The downstream particles are those particles which have been introduced into the tester and which have passed through the bulk of the test fabric. Therefore, the "% penetration" value reported in TABLEs I-V is a percentage of the total quantity of particles introduced into a controlled air flow within the tester which pass through the bulk of the test fabric. The size of the test fabric was 11.54 cm (4.5") in diameter.

The air flow may be constant or varied. At about 32 liters per minute of air flow, a pressure differential of between 4 and 5 mm Water Gage develops between the atmosphere on the upstream side of the test fabric as compared to the atmosphere on the down stream side of the test fabric.

The filtration efficiencies for SAMPLES 1-3 are reported in TABLES I-III, respectively.

**TABLE I**

| SAMPLE 1 | | |
|---|---|---|
| | Pre Corona Discharge | Post Corona Discharge |
| % Penetration | 33.2% | 2.57% |
| | | |
| ▲ P MM H₂O | 7.0 | 6.9 |
| | | |
| Flow in l/m | 30.7 | 30.6 |
| | | |
| Surface Charge | -60 Side A | -5 Side A |
| | -3 Side B | -5 Side B |

**TABLE II**

| SAMPLE 2 | | |
|---|---|---|
| | Pre Corona Discharge | Post Corona Discharge |
| % Penetration | 63.0% | 62.4% |
| | | |
| ▲ P MM H₂O | 5.4 | 4.2 |
| | | |
| Flow in l/m | 28.5 | 28.3 |
| | | |
| Surface Charge | -1 Side A (only) | -66 Side A (only) |

**TABLE III**

| SAMPLE 3 | | |
|---|---|---|
| | Pre Corona Discharge | Post Corona Discharge |
| % Penetration | 53.7% | 51.0% |
| | | |
| ▲ P MM H₂O | 4.6 | 4.8 |
| | | |
| Flow in l/m | 29.8 | 30.8 |
| | | |
| Surface Charge | -7 Side A | -2 Side A |
| | -74 Side B | -5 Side B |

As illustrated in TABLE I, the "% penetration" for SAMPLE 1, the SMS laminate with FX1801 present in the meltblown layer, after being subjected to corona discharge was lower, by greater than 10 fold, as compared to the "% penetration" for SAMPLE 1 without corona treatment. In other words, 10 fold fewer particles passed through the bulk of the corona discharge treated fabric as compared to the non-corona discharge treated fabric.

As illustrated in TABLES II and III, there was very little difference observed in the "% penetration" between the corona discharge treated SAMPLES 2 and 3 and the non-corona discharge treated SAMPLES 2 and 3. While these results suggest that no significant improvement in the particulate barrier properties of either SAMPLE 2 or 3 were achieved by corona discharge treatment, whether all fluorinated alkyl alkoxylate-based materials or all polymeric fluoroaliphatic ester-based materials would similarly effect the particulate barrier properties of a corona discharge treated nonwoven is unknown.

When the comparing the "% penetration" results of the post corona discharged treated SAMPLE 1 (TABLE I) with the "% penetration" results of the post corona discharge treated SAMPLES 2 and 3 (TABLES II and III, respectively), it is clear that significantly different and unexpected results are achieved. As such, while nonwoven webs may be treated with several alcohol repellents, all alcohol repellent-treated nonwoven webs do not demonstrate improved particulate barrier properties when subjected to corona discharge. Applicant has demonstrated that the particulate barrier properties of a nonwoven web treated with an alcohol repellent material formed from fluorinated urethane derivatives, an example of which includes FX-1801, are greatly improved when such a nonwoven is subjected to corona discharge.

TABLE IV reports the "% penetration" at various test sites across the width of a corona discharge treated SAMPLE 1 at varying flow rates.

**TABLE IV**

| | | | | | |
|---|---|---|---|---|---|
| Flow in l/m | 9.4 | 11.8 | 16.0 | 31.8 | 66.9 |
| | | | | | |
| ▲ P MM H₂O | 1.8 | 2.1 | 3.0 | 5.8 | 13.7 |
| | | | | | |
| % Penetration | 4.12 | 0.255 | 2.12 | 3.74 | 3.42 |

TABLE V reports the "% penetration" at various test sites across the width of a corona discharge treated SAMPLE 1 at a constant flow rate.

**TABLE V**

| | | | |
|---|---|---|---|
| Flow in l/m | 23.1 | 23.1 | 23.1 |
| | | | |
| ▲ P MM H₂O | 4.6 | 5.0 | 4.9 |
| | | | |
| % Penetration | 0.974 | 1.00 | 3.55 |

The results in TABLES IV and V indicate that the changes in ▲ P MM H₂O and the flow rate (l/m) over the range studied have little effect on the resulting "% penetration" of the test particles. The differences may be explained in terms of web formation variances, and more particularly, in terms of fiber density variances across the web. In other words, the variances in the "% penetration" values may result from variances in the fiber density of the particular test sites across the web.

While the invention has been described in detail with respect to specific embodiments thereof, it will be appreciated that those skilled in the art, upon attaining an understanding of the foregoing, may readily conceive of alterations to, variations of and equivalents to these embodiments. Accordingly, the scope of the present invention should be assessed as that of the appended claims.

## Claims

1. A nonwoven web laminate comprising:
at least two layers formed from spunbond fibers and at least one layer formed from meltblown fibers, wherein the at least one layer formed from meltblown fibers is between two layers formed from spunbond fibers, and
wherein the at least one layer formed from meltblown fibers comprises an alcohol repellent formed from (a) fluorinated urethane derivative(s), **characterised in that** the fibers of at least one of the layers have been subjected to direct current corona discharge.

2. The nonwoven web laminate of claim 1 wherein the meltblown fibers comprise a blend of polypropylene and polybutylene.

3. The nonwoven web laminate of claim 2 wherein the polybutylene is present in the blend in a range from 0.5 to 20 percent weight of the blend.

4. The nonwoven web laminate of one of the preceding claims wherein the basis weight of the nonwoven web laminate is about 61.038g/m² (1.8 ounces per square yard).

5. The nonwoven web laminate of one of the preceding claims wherein the basis weight of the at least one layer which comprises meltblown fibers is about 15.2595g/m² (0.45 ounces per square yard).

6. The nonwoven web laminate of one of the preceding claims wherein the fibers of all of the layers have been subjected to direct current corona discharge.

7. The nonwoven web laminate of one of the preceding claims wherein the particulate filtration efficiency of the laminate, as measured by the NaCl Filter Efficiency Test, is improved by greater than 10 fold over a similar nonwoven web laminate which has not been subjected to direct current corona discharge.

8. The nonwoven web laminate of one of the preceding claims wherein the fluorinated urethane alcohol repellent is 3M FX-1801 (trade designation).

9. The nonwoven web laminate of one of the preceding claims, wherein at least one of the layers which comprises spunbond fibers comprises an antistat alcohol phosphate salt.

10. The nonwoven web laminate of claim 9 wherein the antistat alcohol phosphate salt is DuPont ZELEC (registered trademark).

11. The nonwoven web laminate of claim 9 or 10 wherein the particulate filtration efficiency, as measured by the NaCl Filter Efficiency Test, across the width of the nonwoven web laminate ranges from between about 0.974 to about 3.55.

12. The nonwoven web laminate of one of claims 9 to 11 which has been necked softened by 8% at ambient temperature.

## Patentansprüche

1. Vliesbahnlaminat umfassend:
wenigstens zwei aus spinngebundenen Fasern gebildete Lagen und wenigstens eine aus schmelzgeblasenen Fasern gebildete Lage, wobei die wenigstens eine aus schmelzgeblasenen Fasern gebildete Lage zwischen zwei aus spinngebundenen Fasern gebildeten Lagen liegt, und
wobei die wenigstens eine aus schmelzgeblasenen Fasern gebildete Lage einen Alkoholrepellent umfasst, der aus (einem) fluorierte(n) Urethanderivat(en) gebildet ist, **dadurch gekennzeichnet, dass** die Fasern von wenigstens einer der Lagen einer Gleichstrom-Coronaentladung unterzogen wurden.

2. Vliesbahnlaminat gemäß Anspruch 1, wobei die schmelzgeblasenen Fasern eine Mischung aus Polypropylen und Polybutylen umfassen.

3. Vliesbahnlaminat gemäß Anspruch 2, wobei das Polybutylen in der Mischung in einem Bereich von 0,5 bis 20 Gewichtsprozent der Mischung vorhanden ist.

4. Vliesbahnlaminat gemäß einem der vorhergehenden Ansprüche, wobei das Flächengewicht des Vliesbahnlaminats etwa 61,038 g/m² (1,8 Unzen pro Quadratyard) ist.

5. Vliesbahnlaminat gemäß einem der vorhergehenden Ansprüche, wobei das Flächengewicht von der wenigstens einen Lage, die schmelzgeblasene Fasern umfasst, etwa 15,2595 g/m² (0,45 Unzen pro Quadratyard) ist.

6. Vliesbahnlaminat gemäß einem der vorhergehenden Ansprüche, wobei die Fasern aller Lagen einer Gleichstrom-Coronaentladung unterzogen wurden.

7. Vliesbahnlaminat gemäß einem der vorhergehenden Ansprüche, wobei die partikuläre Filtrationseffizienz des Laminats, durch den NaCl-Filtereffizienztest gemessen, um mehr als das 10fache eines ähnlichen Vliesbahnlaminats, das keiner Gleichstrom-Coronaentladung unterzogen wurde, verbessert wird.

8. Vliesbahnlaminat gemäß einem der vorhergehenden Ansprüche, wobei der fluorierte Urethan-Alkoholrepellent 3M FX-1801 (Handelsbezeichnung) ist.

9. Vliesbahnlaminat gemäß einem der vorhergehenden Ansprüche, wobei wenigstens eine der Lagen, die spinngebundene Fasern umfasst, ein antistatisches Alkoholphosphatsalz umfasst.

10. Vliesbahnlaminat gemäß Anspruch 9, wobei das antistatische Alkoholphosphatsalz DuPont ZELEC (eingetragenes Warenzeichen) ist.

11. Vliesbahnlaminat gemäß Anspruch 9 oder 10, wobei die partikuläre Filtrationseffizienz, durch den NaCl-Filtereffizienztest gemessen, über die Breite des Vliesbahnlaminats zwischen etwa 0,974 und etwa 3,55 liegt.

12. Vliesbahnlaminat gemäß einem der Ansprüche 9 bis 11, welches bei Umgebungstemperatur um 8 % halserweicht wurde.

## Revendications

1. Stratifié de nappes non tissées comprenant :
au moins deux couches formées de fibres obtenues par filage-nappage et au moins une couche formée à partir de fibres obtenues par fusion-soufflage, ladite au moins une couche formée à partir de fibres obtenues par fusion-soufflage étant située entre les deux couches formées de fibres obtenues par filage-nappage, et
ladite au moins une couche formée à partir de fibres obtenues par fusion-soufflage comprenant un répulsif aux alcools formé à partir de un ou plusieurs dérivé(s) uréthane(s) fluoré(s), **caractérisé en ce que** les fibres de l'une au moins de couches ont été soumises à une décharge en couronne de courant continu.

2. Stratifié de nappes non tissées selon la revendication 1, dans lequel les fibres obtenues par fusion-soufflage sont constituées d'un mélange de polypropylène et de polybutylène.

3. Stratifié de nappes non tissées selon la revendication 2, dans lequel le polybutylène est présent dans le mélange dans une gamme allant de 0,5 à 20% en poids du mélange.

4. Stratifié de nappes non tissées selon l'une des revendications précédentes, dont le poids de base est d'environ 61,038 g/m² (1,8 once/yard²).

5. Stratifié de nappes non tissées selon l'une des revendications précédentes, dans lequel le poids de base de ladite au moins une couche constituée de fibres obtenues par fusion-soufflage est d'environ 15,2595 g/m² (0,45 once/yard²).

6. Stratifié de nappes non tissées selon l'une des revendications précédentes, dans lequel les fibres de toutes les couches ont été soumises à une décharge en couronne de courant continu.

7. Stratifié de nappes non tissées selon l'une des revendications précédentes, dans lequel l'efficacité de filtration des particules du stratifié, tel que mesurée par le Test d'Efficacité de Filtration du NaCl, est améliorée de plus de 10 fois par rapport à un stratifié de nappes non tissées similaire mais qui n'a pas été soumis à une décharge en couronne de courant continu.

8. Stratifié de nappes non tissées selon l'une des revendications précédentes, dans lequel l'uréthane fluoré formant répulsif aux alcools est le FX-1801 (désignation commerciale) de 3M.

9. Stratifié de nappes non tissées selon l'une des revendications précédentes, dans lequel l'une au moins des couches qui est constituée de fibres obtenues par filage-nappage comprend un sel de phosphate alcoolique antistatique.

10. Stratifié de nappes non tissées selon la revendication 9, dans lequel le sel de phosphate alcoolique antistatique est le ZELEC (marque enregistrée) de Dupont.

11. Stratifié de nappes non tissées selon la revendication 9 ou 10, dans lequel l'efficacité de filtration des particules, telle que mesurée par le Test d'Efficacité de Filtration du NaCl, d'un côté à l'autre de la largeur du stratifié de nappes non tissées, est comprise dans la gamme allant d'environ 0,974 à environ 3,55.

12. Stratifié de nappes non tissées selon l'une des revendications 9 à 11, qui a été ramolli sous striction de 8% à la température ambiante.
